# FASCICULE DE BREVET EUROPEEN

(11) **EP 2 513 639 B1**
(45) Date de publication et mention de la délivrance du brevet: **25.03.2020**
(21) Numéro de dépôt: 10810943.0
(22) Date de dépôt: 16.12.2010
(51) Int. Cl.: G01N 21/95, B29C 67/00, G01N 3/20, G01N 21/954

(54) **APPAREIL ET PROCEDE POUR L'EXAMEN DE LA PAROI INTERNE D'UNE PORTION DE TUBE, EN PARTICULIER POUR EVALUER LE NIVEAU DE DEGRADATION D'UN TUBE EN MATIERE PLASTIQUE**
VORRICHTUNG UND VERFAHREN ZUR UNTERSUCHUNG DER INNENWAND EINES ROHRTEILS, IM BESONDEREN ZUR BEURTEILUNG DES DEGENERATIONSAUSMASSES EINES KUNSTSTOFFROHRS
APPARATUS AND METHOD FOR EXAMINING THE INTERNAL WALL OF A PORTION OF A TUBE, PARTICULARLY FOR EVALUATING THE EXTENT OF DEGRADATION OF A PLASTIC TUBE

(30) Priorité: 18.12.2009 FR 0906161
(43) Date de publication de la demande: 24.10.2012
(73) Titulaire: R+I Alliance, 92040 Paris La Defense (FR)
(72) Inventeur: RABAUD, Benjamin, 78500 Sartrouville (FR); GLUCINA, Karl, 78780 Maurecourt (FR); COCHENNEC, Christophe, 95800 Courdimanche (FR)
(74) Mandataire: IPAZ
(86) Numéro de dépôt international: PCT/IB2010/055866
(87) Numéro de publication internationale: WO 2011/073936

(56) Documents cités:
- JP-A- 2003 344 240
- US-A- 1 505 141
- US-A- 2 748 829
- ROZENTAL-EVESQUE M, RABAUD B, SANCHEZ M, LOUIS S, BRUZEK C-E: "The Nol Ring test. An improved tool for characterising the mechanical degradation of non-failed polyethylene pipe house connections", PROCEEDINGS OF THE PLASTICS PIPES XIV CONFERENCE, 22-24 OCTOBER, BUDAPEST, 2008, pages 1-10, XP002592081, HUNGARY
- CHUNG S, KOSARI T, LI T, OLIPHANT K, VIBIEN P, ZHANG J: "An examination of field failures of plastic piping system components in potable water applications", PROCEEDINGS OF THE ANTEC CONFERENCE, CINCINNATI, 2007, pages 1-5, XP002592082, USA

## Description

L'invention est relative à un appareil pour l'examen de la paroi interne d'un tube par retournement d'une portion de tube dont la section est ouverte sur un arc de circonférence, en particulier sur environ un quart de circonférence.

L'invention concerne plus particulièrement, mais non exclusivement, un tel appareil pour caractériser la dégradation de tubes en matière plastique, notamment de tubes en polyéthylène, plus particulièrement encore de tubes en polyéthylène utilisés dans des réseaux de distribution d'eau potable.

L'utilisation des matériaux plastiques, et notamment du polyéthylène, pour la réalisation ou la réhabilitation des réseaux de distribution d'eau potable a considérablement augmenté depuis ces dernières années. En effet, les conduites en polyéthylène présentent de nombreux avantages : facilité de mise en œuvre, meilleure résistance à la corrosion que les conduites métalliques, coût attractif.

Cependant, depuis quelques temps, des fissurations prématurées de conduites en polyéthylène sont apparues, notamment sur des réseaux où la désinfection finale est assurée par du dioxyde de chlore. Les recherches effectuées ont mis en évidence que ces fissurations résultaient d'une dégradation prématurée de la paroi interne des conduites concernées. La dégradation est causée par une oxydation du polyéthylène au contact de l'eau. Cette oxydation entraîne l'apparition de microfissures dont certaines peuvent traverser la paroi et déboucher vers l'extérieur.

Un certain nombre de techniques expérimentales de laboratoire existent qui permettent de quantifier la dégradation du polyéthylène.

En particulier, un test expérimental de laboratoire consiste à retourner une portion de tube dont la section est ouverte sur un arc de circonférence pour examiner la zone retournée et la présence éventuelle de déchirures ou de séparation de matière se manifestant sous forme de fissures.

Cette méthode d'examen de tubes par retournement est préconisée spécialement pour les tubes en polyéthylène, mais peut s'appliquer à des tubes réalisés en d'autres matières plastiques.

Chung S. et al. "An examination of field failure of plastic piping system components in potable water applications" Proceedings of the Antec Conférence, Cincinnati, 2007, fournit une technique d'analyse par retournement.

JP2003344240 A1 décrit un appareil pour l'examen de la paroi interne d'un tube par étalement. US15505141 divulgue un dispositif de retournement de carcasse de pneu.

L'invention a pour but, surtout, de fournir un appareil qui permet de réaliser de manière rapide et reproductible l'opération de retournement de la portion de tube aussi bien dans un laboratoire que sur le terrain. Il convient, pour cela, que l'appareil soit d'un poids relativement réduit et puisse être aisément mis en oeuvre. La solution proposée correspond à un appareil selon la revendication 1, et à un procédé selon la revendication 8.

Selon l'invention, un appareil pour l'examen de la paroi interne d'un tube par retournement d'une portion de tube dont la section est ouverte sur un arc de circonférence, en particulier sur environ un quart de circonférence, est caractérisé en ce qu'il comporte :
- deux barres parallèles voisines, montées coulissantes dans un bâti et pouvant être déplacées dans leur plan, barres autour desquelles peut être engagée la concavité de la portion ouverte du tube, avec son axe géométrique parallèle aux barres,
- un moyen de poussée suivant une direction sensiblement orthogonale au plan moyen des barres, propre à venir en appui contre la zone convexe extérieure de la portion de tube,
- et un moyen d'écartement propre à espacer les barres en réponse à la poussée exercée contre la zone convexe de la portion de tube,
l'ensemble étant prévu pour permettre de retourner complètement la portion du tube de part et d'autre de la zone de poussée.

Le moyen de poussée comprend, pour venir au contact de la portion de tube, un élément cylindrique interchangeable, d'axe géométrique parallèle aux barres, disposé du côté convexe de la portion de tube à l'opposé des barres, l'élément cylindrique étant porté à chaque extrémité par un poussoir déplacé par une tige.

Le diamètre de l'élément cylindrique est avantageusement au moins égal à l'épaisseur de la portion de tube à retourner. La longueur de l'élément cylindrique est au moins sensiblement égale à celle des barres.

De préférence, le moyen de poussée comprend un amplificateur d'effort pour déplacer l'élément cylindrique contre la portion de tube. Cet amplificateur d'effort peut être actionné manuellement ou par un moteur électrique.

Le moyen d'écartement des barres peut comprendre une double came propre à coopérer avec un support coulissant associé à chaque barre, cette came étant déplacée par le poussoir pour provoquer l'écartement des barres lors de la poussée.

Avantageusement, l'appareil comporte un dispositif d'observation déplaçable avec moyen optique de grossissement, en particulier une loupe avec carré de comptage, pour observer la surface interne de la portion de tube retournée.

Le dispositif d'observation peut comporter un appareil de prise de vues numérique, relié de préférence à des moyens de traitement de l'image avec logiciel propre à déterminer un degré de dégradation du tube.

L'invention est également relative à un procédé d'analyse du niveau de dégradation d'un tube en matière plastique, notamment en polyéthylène, selon lequel on prélève une portion de tube dont un arc de circonférence est retiré pour ouvrir la section, caractérisé en ce que la portion ouverte du tube est retournée avec un appareil tel que défini précédemment, et la paroi interne de la zone retournée est observée pour déterminer le niveau de dégradation du tube.

De préférence, la portion de tube est retournée à vitesse de déplacement constante du moyen de poussée.

Dans le cas d'un tube en polyéthylène noir, une appréciation visuelle de la dégradation peut être effectuée selon un abaque constitué par un ensemble de représentations de référence de portions retournées de tube correspondant à divers niveaux de dégradation.

Un abaque pour la mise en œuvre du procédé défini précédemment est constitué par un ensemble de représentations de référence de portions de tube retournées avec un appareil tel que défini précédemment, correspondant à divers niveaux de dégradation.

L'invention consiste, mises à part les dispositions exposées ci-dessus, en un certain nombre d'autres dispositions dont il sera plus explicitement question ci-après à propos d'exemples de réalisation décrits avec références aux dessins annexés, mais qui ne sont nullement limitatifs. Sur ces dessins :
Fig. 1 est une vue en perspective d'un appareil selon l'invention, alors que les barres d'écartement sont rapprochées l'une contre l'autre, et qu'une portion de tube est installée autour d'elles..
Fig. 2 est une vue à plus petite échelle, sous un autre angle que Fig. 1, de l'appareil en début de poussée et d'écartement des barres, la grande face avant du bâti étant retirée pour faciliter la lecture.
Fig. 3 montre, semblablement à Fig. 2, l'appareil en fin de poussée et de retournement de la portion de tube avec, au-dessus, une portion de tube retournée extraite de l'appareil.
Fig. 4 illustre en perspective, à plus petite échelle, l'appareil surmonté d'un dispositif d'observation constitué par un appareil de prise de vues numérique relié à une unité de traitement d'images.
Fig. 5 est une représentation d'une portion de surface interne d'un tube en polyéthylène noir avec un niveau nul de dégradation.
Fig. 6 montre, semblablement à Fig. 5, une partie de la surface interne d'un tube dont le niveau de dégradation est faible.
Fig. 7 à 9 montrent, semblablement à Fig. 6, des portions de la surface interne d'un tube de plus en plus dégradée.

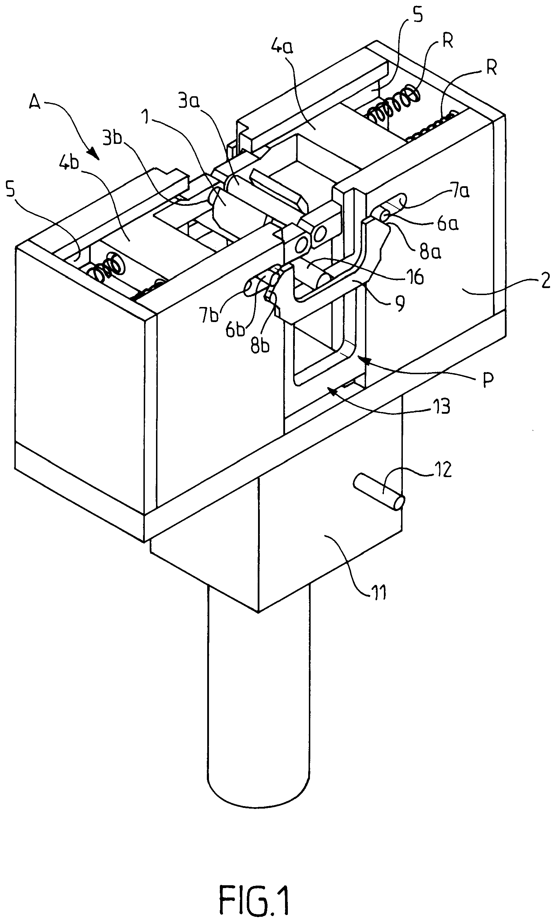

En se reportant à Fig. 1 des dessins, on peut voir un appareil A pour le retournement d'une portion 1 de tube ouverte sur un arc de circonférence. La portion 1 a la forme d'un anneau ouvert s'étendant suivant environ trois quarts de circonférence et ouvert suivant un quart. Cette portion 1 est prélevée sur une conduite en matière plastique, notamment en polyéthylène noir pour réseaux de distribution d'eau, et présente généralement un diamètre externe de 20 mm à 50 mm, l'épaisseur de paroi pouvant varier entre 2 et 7 mm. Cet exemple n'est pas limitatif. L'appareil A peut également servir à retourner des portions de tube en une autre matière, par exemple des portions de tubes métalliques.

L'appareil A comporte un bâti 2 en forme de parallélépipède rectangle, dont les parois périphériques sont verticales dans la représentation de Fig. 1. Le bâti est ouvert à sa partie supérieure. A titre d'exemple non limitatif, ce bâti peut avoir une largeur d'environ 150 mm, une hauteur d'environ 220 mm, et une profondeur d'environ 55 mm.

Deux barres 3a, 3b voisines sont montées coulissantes dans le plan commun de leurs axes géométriques qui est un plan horizontal dans la représentation de Fig. 1. Chaque barre 3a, 3b est portée, à ses extrémités, par une branche d'un support 4a, 4b en forme d'étrier, monté coulissant dans des rainures horizontales 5 prévues dans les parois longitudinales verticales du bâti 2.

Des ressorts de compression R sont prévus entre les parois transversales du bâti 2 et la face en regard des supports 4a, 4b de manière à pousser ces supports l'un vers l'autre et à rapprocher les barres 3a, 3b qui peuvent venir en contact l'une avec l'autre en position de départ.

La concavité de la portion ouverte 1 de tube peut être engagée autour des barres 3a, 3b rapprochées comme illustré sur Fig. 1, l'arc d'ouverture de la portion 1 étant orienté vers le haut. La portion 1 est disposée de manière à admettre le même plan vertical médiateur que l'ensemble des barres 3a, 3b. Chaque support 4a, 4b est muni sur ses côtés d'un doigt 6a, 6b traversant une ouverture oblongue 7a, 7b prévue dans les grandes faces verticales du bâti 2. Les doigts 6a, 6b font saillie vers l'extérieur et viennent en appui contre des rampes inclinées 8a, 8b d'une double came 9 en forme de U tourné vers le haut, constituant un moyen d'écartement. Les rampes 8a, 8b convergent vers le haut de telle sorte que la montée de la came 9 provoque l'écartement des doigts 6a, 6b, des supports 4a, 4b et des barres 3a, 3b. Des doigts 6a, 6b et une came 9 sont prévus de chaque côté du bâti 2.

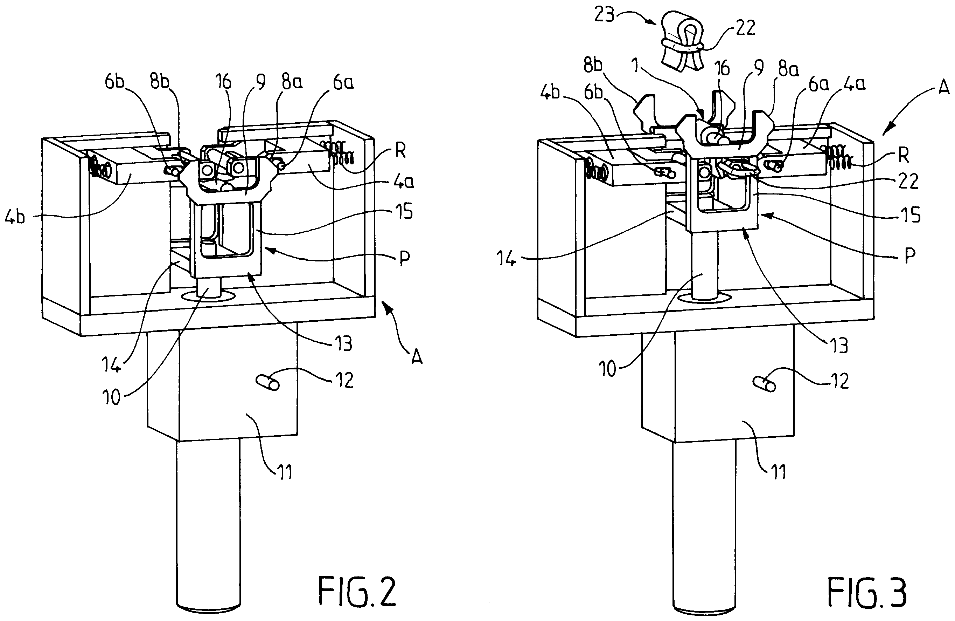

Un moyen de poussée P est prévu pour venir en appui contre la zone convexe extérieure de la portion 1. Ce moyen de poussée P comprend une tige 10 (Fig. 2 et 3) orthogonale au plan des axes géométriques des barres 3a, 3b, et donc verticale lorsque les barres sont disposées dans un plan horizontal.

Le déplacement vertical de la tige 10 est assuré par un moyen 11 amplificateur d'effort, notamment à engrenages, en particulier à couple roue et vis tangente. La mise en action de l'amplificateur d'effort est assurée par l'entraînement en rotation d'un axe 12, soit au moyen d'une manivelle ou d'un volant (non représenté) actionné manuellement, soit au moyen d'un moteur, notamment électrique, (non représenté).

Un poussoir 13, en forme d'étrier double ou de lanterne, est fixé à l'extrémité supérieure de la tige 10. Ce poussoir comporte une plaque de base 14 (Fig. 2 et 3) dans laquelle est prévu un trou central traversé par une extrémité filetée de la tige 10 pour la fixation du poussoir 13 par un écrou. Chaque extrémité latérale de la plaque 14 est solidaire d'un cadre 15 (Fig. 2 et 3) présentant une ouverture rectangulaire centrale, situé dans un plan parallèle à la grande face verticale voisine du bâti. Le bord horizontal supérieur du cadre 15 supporte l'extrémité d'un élément cylindrique interchangeable 16 d'axe géométrique parallèle aux barres 3a, 3b, constituant l'organe de poussée proprement dit. Cet élément cylindrique 16 vient au contact de la portion 1, initialement contre sa génératrice extérieure équidistante des extrémités de l'arc ouvert de la portion 1.

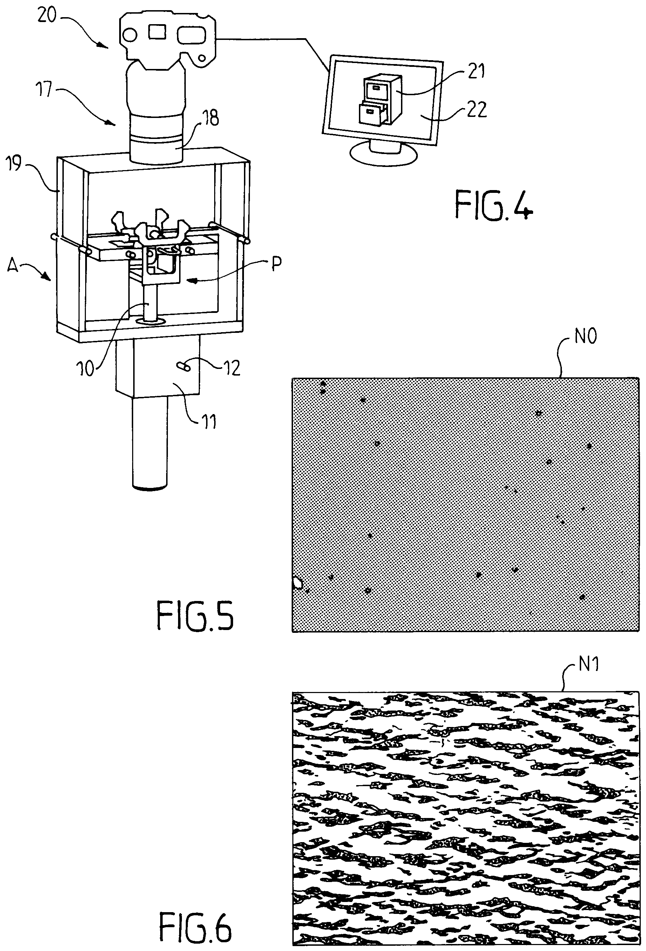

L'appareil comporte avantageusement un dispositif d'observation 17 (Fig.4) déplaçable, avec moyens optiques de grossissement, en particulier une loupe 18 avec carré de comptage définissant une unité de surface, par exemple de 3.1 mm². Dans ce carré l'observateur peut dénombrer un certain nombre de traits ou éléments caractéristiques de la zone examinée. Le dispositif 17 peut comprendre un boîtier support 19, déplaçable, posé sur le bâti 2 de l'appareil. La loupe 18 est située au centre de la face supérieure du boîtier 19. Le dispositif d'observation 17, placé au-dessus de la face supérieure ouverte du boîtier, permet d'examiner la surface interne de la portion de tube retournée.

Le dispositif d'observation 17 peut comprendre un appareil de prise de vues numérique 20 dont l'objectif est maintenu au-dessus, ou à la place, de la loupe 18, pour la saisie de photos numériques de la surface interne examinée de la portion de tube retournée. Avantageusement, l'appareil de prise de vues 20 est relié à des moyens 21 de traitement de l'image avec logiciel propre à déterminer un degré de détérioration du tube. De préférence des moyens d'affichage 22 sont prévus et reliés aux moyens de traitement 21 pour visualiser les images et/ou les résultats.

Ceci étant, pour évaluer l'état de dégradation d'une conduite en polyéthylène, selon l'invention, on opère comme suit.

Dans un laboratoire, ou sur le terrain, on prélève sur une conduite en polyéthylène à examiner un anneau dont la longueur axiale peut être d'environ 10 mm. Généralement, la conduite présente un diamètre externe de 20 à 50 mm et une épaisseur de paroi qui varie entre 2 et 7 mm.

On découpe, dans l'anneau circulaire prélevé, un arc d'environ un quart de tour de façon à obtenir une portion à section ouverte, s'étendant sur environ trois quarts de tour.

Un appareillage (non représenté) est prévu pour permettre de réaliser l'anneau de trois quarts de tour. Cet appareillage est constitué de gabarits coniques superposés sur lesquels l'anneau de tube complet est enfilé. Selon le diamètre interne du tube, l'anneau complet stoppe sa course sur une position plus ou moins haute. Deux lames placées avec un angle de 90° l'une par rapport à l'autre, permettent alors la découpe d'un anneau ouvert, s'étendant sur trois quarts de tour, suite à la mise en contact de façon manuelle des lames et de l'anneau. Selon l'état de saleté de la paroi interne de la conduite, l'opérateur pourra être amené à la nettoyer à l'aide d'une lingette nettoyante ou d'un chiffon humide.

L'éprouvette, formée par l'anneau de trois quarts de tour, constitue la portion 1 qui est alors mise en place dans l'appareil A de l'invention. Les barres 3a, 3b sont au contact l'une de l'autre et la portion 1 est disposée, comme illustré sur Fig. 1, avec sa partie ouverte tournée vers le haut. L'élément cylindrique de poussée 16 est choisi de sorte que son diamètre soit adapté au diamètre et à l'épaisseur de la portion 1.

Le moyen de poussée P est alors mis en action soit manuellement, soit par un moteur non représenté, afin de faire monter la tige 10 qui pousse l'élément cylindrique 16 contre la partie convexe inférieure de la portion 1 dont les extrémités sont retenues par les barres 3a, 3b. Ces barres s'écartent l'une de l'autre au fur et à mesure de la montée de l'élément 16 par suite de la coopération des rampes 8a, 8b avec les doigts 6a, 6b.

La contrainte appliquée par l'élément cylindrique 16 horizontal induit le retournement de l'anneau de conduite. L'élément cylindrique 16 est interchangeable suivant l'épaisseur de la paroi du tube. Le retournement de l'anneau est facilité par les cames 9 qui induisent, en début de course de l'élément 16, l'espacement des deux barres 3a, 3b. La course verticale de l'élément cylindrique 16 horizontal est stoppée par des butées (non représentées) réglées selon le diamètre du tube dont provient la portion 1. Sous l'action des ressorts de rappel R, les deux barres coulissantes 3a, 3b rapprochent les deux bords extérieurs de l'anneau.

L'action conjuguée d'écartement des barres 3a, 3b et de la poussée par l'élément cylindrique 16 contre la surface extérieure de la portion 1 provoque un aplatissement relatif de la portion 1 comme illustré sur Fig. 2, puis un retournement complet. Cette portion 1 se trouve enroulée, sensiblement sur 180°, sur l'élément cylindrique 16 sous la forme d'un cavalier dont la surface extérieure est alors la surface interne de la portion 1.

Les observations sur la face interne de la portion 1 retournée peuvent s'effectuer alors qu'elle se trouve encore sur l'appareil A.

L'éprouvette ainsi retournée peut être maintenue dans cette position à l'aide d'un organe de retenue 22 en forme de U engagé, à l'horizontale, de part et d'autre des branches retournées de la portion 1 pour la maintenir dans cet état, après séparation de l'élément cylindrique 16. On obtient alors un échantillon 23 comme illustré sur Fig. 3, qui peut être conservé pour analyse complémentaire.

Le retournement complet de la portion 1 de conduite est réalisé de préférence à vitesse constante. La paroi interne de la section du tube présente, après retournement, un rayon de courbure convexe, alors qu'elle présentait un rayon de courbure concave avant l'opération. Le rayon de courbure de la paroi externe du tube retourné est sensiblement égal au rayon de l'élément cylindrique 16 qui est lui-même égal au moins au double de l'épaisseur de la paroi de la section 1.

Une fois l'opération de retournement effectuée, le dispositif d'observation 17 avec grossissement est placé au-dessus de la surface interne de la portion 1 de tube. Un éclairage d'appoint intégré dans le dispositif optique facilite l'observation. Après la mise au point du système de grossissement, soit une photographie de la paroi interne peut être réalisée, soit une observation à l'œil nu est pratiquée.

Pour réaliser la photographie du faciès de dégradation de la paroi interne du tube, l'appareil de prise de vues numérique 20 est fixé sur le dispositif d'observation. La photo numérique réalisée est transférée dans un logiciel 21 de traitement d'image. Ce dernier est prévu pour permettre la binarisation de la photo réalisée. La binarisation s'attachera à différencier les zones fragilisées du matériau des zones intactes. Sur la base des objets binarisés à partir de la photo, le logiciel est prévu pour être à même de mesurer les paramètres physiques qui les définissent (exemple : largeur, longueur, surface, rugosité, diamètre de Feret, ...).

Les résultats obtenus sont alors transmis aux moyens d'affichage 22, notamment constitués par une feuille de calcul. Cette feuille de calcul permet, par l'étude de paramètres physiques définissant les objets binaires, de définir par dichotomie l'intensité du phénomène de fragilisation de la paroi interne de la conduite en polyéthylène étudiée, en particulier sur une échelle de sept niveaux discrets allant d'un état non dégradé à un état très fortement dégradé.

En variante, il est possible d'effectuer une appréciation visuelle de l'état de dégradation en utilisant un abaque constitué par un ensemble de photographies ou représentations de référence, illustrées sur les Fig. 5-9, et permettant d'évaluer le niveau de dégradation du tube sur une échelle comportant plusieurs niveaux discrets. L'opérateur identifie le niveau de dégradation du tube étudié par comparaison avec l'abaque.

Les photographies de référence des Fig. 5 à 9 illustrent une zone de la paroi interne de la conduite d'environ. L'observation de la portion 1 retournée est effectuée à l'aide d'un dispositif de grossissement du genre loupe comportant un carré de comptage. Par comparaison avec les représentations des Fig. 5-9, l'intensité du phénomène de dégradation peut être évaluée visuellement suivant quatre niveaux en considérant le nombre et la taille des zones de polyéthylène de couleur noire, non dégradées.

Fig. 5 correspond à un niveau nul de dégradation N0, avec une zone unique noire de polyéthylène non dégradée.

Fig. 6 correspond à un niveau N1 de dégradation qui se caractérise par la présence de plus de 100 zones fragmentées de couleur noire et de largeur inférieure à 0,10 mm correspondant au polyéthylène non dégradées dans un rectangle de 3.1 mm² de surface.

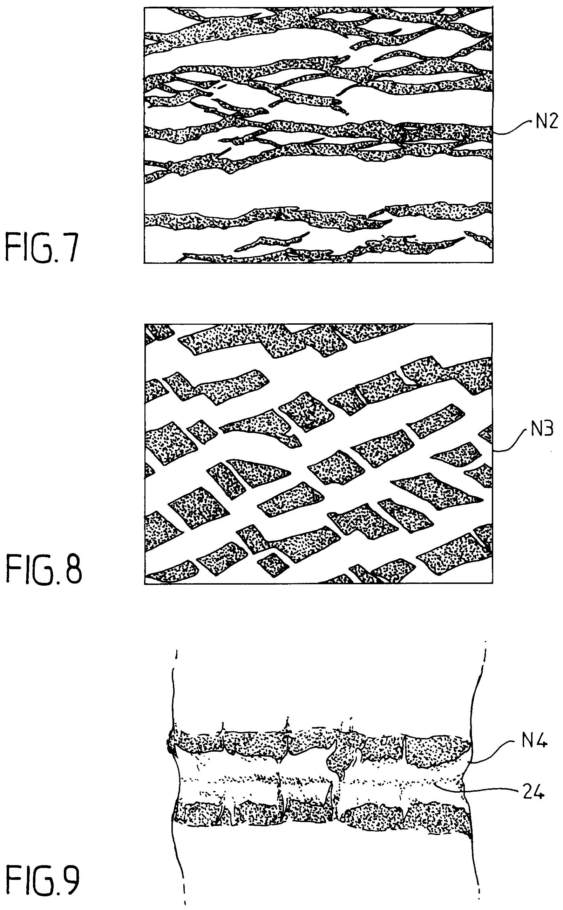

Fig. 7 correspond à un niveau N2 de dégradation présentant entre 2 et 20 zones continues de couleur noire et de largeur inférieure à 0,2 mm.

Fig. 8 correspond à un niveau de dégradation N3 présentant entre 20 et 100 zones fragmentées de couleur noire et de largeur supérieure à 0,2 mm correspondant au polyéthylène non dégradées.

En dernier lieu, Fig. 9 correspond à un niveau maximal de dégradation N4 qui est caractérisé par l'apparition d'une macro-fissuration sous forme d'une zone blanche 24 orientée suivant la direction des génératrices de la zone cylindrique retournée.

Au terme de la comparaison de la zone retournée avec l'abaque des Fig. 5 à 9, l'opérateur, selon le niveau de dégradation constaté, pourra décider le renouvellement ou la réparation de la conduite fuyarde.

Les opérations évoquées ci-dessus, ainsi que les Fig. 5 à 9 constituant l'abaque, sont relatifs à une conduite en polyéthylène noir. Pour des matières plastiques différentes, les indications générales fournies subsistent mais les zones non dégradées auront des couleurs en correspondance avec celle de la matière plastique considérée.

Par exemple, si l'opérateur constate un niveau de dégradation de N0 à N1, il n'est pas nécessaire de remplacer la conduite, mais une simple réparation pourra être réalisée.

Si le niveau de dégradation est égal à N2, le remplacement de la conduite pourra être envisagé pour un futur relativement proche.

Si le niveau de dégradation est égal à N3 ou N4, la conduite devra être remplacée sans tarder.

L'appareil et le procédé conformes à l'invention permettent, non seulement en laboratoire, mais aussi sur le terrain, d'évaluer l'état d'une conduite dans laquelle une fuite s'est déclarée.

A titre préventif, de telles évaluations pourront être effectuées avant même qu'une fuite se produise pour déterminer si le remplacement des conduites est à envisager dans un futur proche ou lointain.

## Revendications

1. Appareil pour l'examen de la paroi interne d'un tube par retournement d'une portion de tube dont la section est ouverte sur un arc de circonférence, en particulier sur environ un quart de circonférence, comportant:
- deux barres parallèles voisines (3a, 3b), montées coulissantes dans un bâti (2) et pouvant être déplacées dans leur plan, barres autour desquelles peut être engagée la concavité de la portion ouverte (1) du tube, avec son axe géométrique parallèle aux barres,
- un moyen de poussée (P) suivant une direction sensiblement orthogonale au plan moyen des barres, propre à venir en appui contre la zone convexe extérieure de la portion (1) de tube,
- et un moyen d'écartement (9) propre à espacer les barres en réponse à la poussée exercée contre la zone convexe de la portion de tube,
l'ensemble étant prévu pour permettre de retourner la portion du tube de part et d'autre de la zone de poussée,
le moyen de poussée (P) comprenant, pour venir au contact de la portion (1) de tube, un élément cylindrique (16) interchangeable, d'axe géométrique parallèle aux barres, disposé du côté convexe de la portion de tube à l'opposé des barres, l'élément cylindrique (16) étant porté à chaque extrémité par un poussoir (13) déplacé par une tige (10), de telle façon que l'action conjuguée
d'écartement des barres et de la poussée par l'élément cylindrique provoque un aplatissement relatif et puis un retournement complet de la portion (1), qui se trouve à la fin enroulée, sensiblement sur 180°, sur l'élément cylindrique.

2. Appareil selon la revendication 1, **caractérisé en ce que** le diamètre de l'élément cylindrique (16) est au moins égal à l'épaisseur de la portion (1) de tube à retourner.

3. Appareil selon l'une quelconque des revendications précédentes, **caractérisé en ce que** le moyen de poussée (P) comprend un amplificateur d'effort (11) pour déplacer l'élément cylindrique (16) contre la portion de tube.

4. Appareil selon l'une quelconque des revendications précédentes, **caractérisé en ce que** le moyen d'écartement des barres comprend une double came (9) propre à coopérer avec un support coulissant (4a, 4b) associé à chaque barre, cette came (9) étant déplacée par le poussoir (13) pour provoquer l'écartement des barres lors de la poussée.

5. Appareil selon l'une quelconque des revendications précédentes, **caractérisé en ce qu'**il comporte un dispositif d'observation (17) déplaçable avec moyen optique de grossissement pour observer la surface interne de la portion de tube retournée.

6. Appareil selon la revendication 5, **caractérisé en ce que** le dispositif d'observation comporte un appareil de prise de vues numérique (20), relié à des moyens de traitement de l'image (21) avec logiciel propre à déterminer un degré de dégradation du tube.

7. Appareil selon l'une quelconque des revendications précédentes, **caractérisé en ce qu'**il comporte en outre un abaque constitué par un ensemble de représentations de référence de portions de tube retournées avec ledit appareil, et correspondant à divers niveaux de dégradation (N0 - N4).

8. Procédé d'analyse du niveau de dégradation d'un tube en matière plastique, notamment en polyéthylène, selon lequel on prélève une portion de tube dont un arc de circonférence est retiré pour ouvrir la section, **caractérisé en ce que** la portion ouverte (1) du tube est retournée avec un appareil selon l'une quelconque des revendications précédentes, et la paroi interne de la zone retournée est observée pour déterminer le niveau de dégradation du tube.

9. Procédé d'analyse, selon la revendication 8, **caractérisé en ce que** la portion de tube (1) est retournée à vitesse de déplacement constante du moyen de poussée (P).

10. Procédé d'analyse, selon la revendication 8 ou 9, d'un tube en polyéthylène noir, **caractérisé en ce qu'**une appréciation visuelle de la dégradation est effectuée selon un abaque constitué par un ensemble de représentations de référence de portions retournées de tube correspondant à divers niveaux de dégradation (N0 - N4).

## Patentansprüche

1. Vorrichtung zur Untersuchung der Innenwand eines Rohrs durch Umwendung eines Rohrabschnitts, dessen Teilabschnitt über einen Umfangsbogen geöffnet ist, insbesondere über ungefähr ein Viertel des Umfangs, umfassend:
- zwei parallele benachbarte Stangen (3a, 3b), die verschiebbar in einem Gestell (2) angeordnet sind und die in ihrer Ebene versetzbar sind, wobei um die Stangen eine Innenwölbung des geöffneten Abschnitts (1) des Rohres mit dessen Achse geometrisch parallel zu den Stangen angeordnet werden kann,
- ein Schiebemittel (P), das einer Richtung im Wesentlichen senkrecht zur mittleren Ebene der Stangen folgt, um mit der äußeren konvexen Zone des Rohrabschnitts (1) in Anlage zu gelangen,
- und ein Spreizmittel (9), um die Stangen in Abhängigkeit des gegen die konvexe Zone des Rohrabschnitts ausgeübten Drucks auseinanderzuspreizen,
wobei die Baugruppe dazu vorgesehen ist, eine Umwendung des Rohrabschnitts auf beiden Seiten der Schubzone zu ermöglichen,
wobei das Schiebemittel (P) ein austauschbares Zylinderelement (16) zum Inkontakttreten mit dem Rohrabschnitt (1) umfasst, das mit einer Achse parallel zu den Stangen ausgerichtet und an der konvexen Seite des Rohrabschnitts den Stangen gegenüber angeordnet ist, wobei das Zylinderelement (16) an jedem Ende durch eine mittels eines Holms (10) bewegte Druckvorrichtung (13) getragen wird, sodass mit dem gleichsamen Auseinanderspreizen der Stangen und Schieben durch das Zylinderelement eine relative Abflachung und dann eine vollständige Umwendung des Abschnitts (1) erreicht wird, welches schließlich in etwa 180° auf dem Zylinderelement umrollt vorliegt.

2. Vorrichtung nach Anspruch 1, **dadurch gekennzeichnet, dass** der Durchmesser des Zylinderelements (16) zumindest gleich der Dicke des umzuwendenden Rohrabschnitts (1) ist.

3. Vorrichtung nach einem der vorhergehenden Ansprüche, **dadurch gekennzeichnet, dass** das Schiebemittel (P) einen Wirkungsverstärker (11) umfasst, um das Zylinderelement (16) gegen den Rohrabschnitt zu bewegen.

4. Vorrichtung nach einem der vorhergehenden Ansprüche, **dadurch gekennzeichnet, dass** das Spreizmittel der Stangen eine Doppelnocke (9) umfasst, die mit einem jeder Stange zugeordneten verschiebbaren Träger (4a, 4b) zusammenwirkt, wobei die Nocke (9) durch die Druckvorrichtung (13) versetzt wird, um das Auseinanderspreizen der Stangen beim Drücken zu bewirken.

5. Vorrichtung nach einem der vorhergehenden Ansprüche, **dadurch gekennzeichnet, dass** diese eine bewegliche Beobachtungsvorrichtung (17) mit einem optischen Vergrößerungsmittel umfasst, um die innere Oberfläche des umgewendeten Rohrabschnitts zu untersuchen.

6. Vorrichtung nach Anspruch 5, **dadurch gekennzeichnet, dass** die Beobachtungsvorrichtung eine numerische Bildaufnahmevorrichtung (20) umfasst, an welche mit einem Bildverarbeitungsmittel (21) verbunden ist, das ein Programm umfasst, um ein Degenerationsausmaß des Rohrs zu bestimmen.

7. Vorrichtung nach einem der vorhergehenden Ansprüche, **dadurch gekennzeichnet, dass** diese außerdem einen Abakus umfasst, der aus einer Gesamtheit von Referenzdarstellungen von mit der Vorrichtung umgewendeten Rohrabschnitten besteht, und die verschiedenen Degenerationsniveaus (N0-N4) entsprechen.

8. Verfahren zur Analyse des Degenerationsausmaßes eines Kunststoffrohres, insbesondere aus Polyethylen, gemäß welchem ein Rohrabschnitt entfernt wird, von dem ein Umfangsbogen entnommen wird um einen Abschnitt zu öffnen, **dadurch gekennzeichnet, dass** der geöffnete Abschnitt (1) des Rohrs mit einer Vorrichtung entsprechend einem der vorhergehenden Ansprüche umgewendet wird und die Innenwand der umgewendeten Zone untersucht wird, um das Degenerationsniveau des Rohres zu bestimmen.

9. Verfahren zur Untersuchung nach Anspruch 8, **dadurch gekennzeichnet, dass** der Rohrabschnitt (1) vom Schiebemittel (P) mit einer konstanten Geschwindigkeit umgewendet wird.

10. Verfahren zur Analyse eines schwarzen Polyethylenrohrs nach Anspruch 8 oder 9, **dadurch gekennzeichnet, dass** eine visuelle Einschätzung der Degeneration mittels eines Abakuses durchgeführt wird, der aus einer Gesamtheit von Referenzdarstellungen von umgewendeten Rohrabschnitten besteht, die verschiedenen Degenerationsniveaus (N0-N4) entsprechen.

## Claims

1. Apparatus for the examination of the internal wall of a tube by turning inside out a tube portion the section of which is open over an arc of its circumference, in particular over approximately a quarter of its circumference, **characterized in that** it includes:
- two adjacent parallel bars (3a, 3b), mounted to slide in a frame (2) and adapted to be moved in their plane, around which bars may be engaged the concave side of the open portion (1) of the tube, with its geometrical axis parallel to the bars,
- pusher means (P) for pushing in a direction substantially orthogonal to the mean plane of the bars, adapted to come to bear against the exterior convex area of the tube portion (1), and
- spreader means (9) adapted to move the bars apart in response to the pushing against the convex area of the tube portion,
wherein the tube portion may be turned inside out on either side of the pushing area.
wherein the pusher means (P) comprise, in order to come into contact with the tube portion (1), an interchangeable cylindrical element (16) having a geometrical axis parallel to the bars, disposed on the convex side of the tube portion opposite the bars, the cylindrical element (16) being carried at each end by a pusher (13) moved by a rod (10), so that the conjugate action of the movement apart of the bars and the cylindrical element pushing causes relative flattening of the portion 1 followed by complete turning inside out, this portion 1 finding itself wound over substantially 180° onto the cylindrical element.

2. The apparatus as claimed in claim 1, **characterized in that** the diameter of the cylindrical element (16) is at least equal to the thickness of the tube portion (1) to be turned inside out.

3. The apparatus as claimed in any one of the preceding claims, **characterized in that** the pusher means (P) comprise a force amplifier (11) for moving the cylindrical element (16) against the tube portion.

4. The apparatus as claimed in any one of the preceding claims, **characterized in that** the means for moving the bars apart comprise a double cam (9) adapted to cooperate with a sliding support (4a, 4b) associated with each bar, this cam (9) being moved by the pusher (13) to cause the bars to be moved apart when pushed.

5. The apparatus as claimed in any one of the preceding claims, **characterized in that** it includes a mobile observation device (17) with optical magnification means for observing the internal surface of the tube portion turned inside out.

6. The apparatus as claimed in claim 6, **characterized in that** the observation device includes a digital camera (20) connected to image processing means (21) with software adapted to determine a degree of deterioration of the tube.

7. The apparatus as claimed in any one of the preceding claims, **characterized in that** it includes moreover a nomogram constituted by a set of reference representations of tube portions turned inside out corresponding to various levels of deterioration (N0 - N4).

8. A method of analyzing the level of deterioration of a plastic material, notably polyethylene, tube, wherein a tube portion is taken from which an arc of its circumference is removed to open the section, **characterized in that** the open portion (1) of the tube is turned inside out by apparatus as claimed in any one of the preceding claims and the internal wall of the area turned inside out is observed to determine the level of deterioration of the tube.

9. The analysis method as claimed in claim 8, **characterized in that** the tube portion (1) is turned inside out at a constant speed of movement of the pusher means (P).

10. The analysis method as claimed in claim 8 or claim 9 when applied to a black polyethylene tube, **characterized in that** a visual assessment of the deterioration is effected according to a nomogram constituted by a set of reference representations of tube portions turned inside out corresponding to various levels of deterioration (N0 - N4).
